# EUROPEAN PATENT APPLICATION

(11) **EP 4 538 082 A1**
(43) Date of publication of application: **16.04.2025**
(21) Application number: 24205572.1
(22) Date of filing: 09.10.2024
(51) Int. Cl.: B60K 1/04, B60K 1/00

(54) **ELECTRIC AUTOMOBILE**

(30) Priority: 10.10.2023 JP 2023175050
(71) Applicant: MAZDA MOTOR CORPORATION, Hiroshima 730-8670 (JP)
(72) Inventor: Kaneko, Naoki, Aki-gun, Hiroshima, 730-8670 (JP); Mochizuki, Masanori, Aki-gun, Hiroshima, 730-8670 (JP)
(74) Representative: von Tietzen und Hennig, Nikolaus

(57) **Abstract**

An electric automobile comprises a battery unit installed in a tunnel portion of a floor panel and a motor provided on a forward or rearward side of the battery unit and operative to drive a driving wheel. The battery unit is configured such that its weight becomes heavier while being separated from the motor.

## Description

### BACKGROUND OF THE INVENTION

The present invention relates to an electric automobile comprising a motor to drive a driving wheel and a battery to supply electric power to the motor.

In the electric automobile with the motor to drive the driving wheel, the traveling distance is greatly affected by the installation quantity of the battery to supply the electric power to the motor. In a case of an electric automobile disclosed in Japanese Patent Laid-Open Publication No. 2011-1950566, for example, a battery is installed in a tunnel portion formed at a floor panel and also below a rear seat, thereby increasing the installation quantity of the battery. Since the battery installed in the tunnel portion of the floor panel is elongated in a longitudinal direction because of a longitudinally-long shape of the tunnel portion, the size, in a vertical direction, of a front-end portion of the battery is longer than that, in the vertical direction, of a middle portion (longitudinally middle portion) of the battery. Meanwhile, since the rear seat is long in a lateral direction, the battery installed below the rear seat is designed such that it has a laterally-long shape so as to enlarge the battery volume (capacity).

Further, Japanese Patent Laid-Open Publication No. 2008-155828 discloses a structure in which a protrusion portion is formed at a portion of a floor panel which is positioned on an assistant-driver's-seat side (passenger-seat side) and a battery is arranged inside the protrusion portion.

Herein, it is generally known that it is preferable that the longitudinal weight balance of a vehicle be equalized or a heavy object be positioned at a center, in the longitudinal direction, of the vehicle as much as possible, so that the steering stability and the kinetic performance of the vehicle can be improved. Accordingly, in designing the automobile, the equalization of the longitudinal weight balance of the vehicle and the positioning of the heavy object at the longitudinal center tend to be emphasized.

Since the motor is a heavy object in the case of the electric automobile, the motor greatly affects the longitudinal weight balance of the vehicle. Further, since the battery is another heavy object and thereby the longitudinal weight balance of the vehicle is affected considerably, the installation position of the battery need to be paid attention to as well.

According to the above-described first patent document, however, the motor to drive the driving wheel is installed at a front side of a vehicle body and the size, in the vertical direction, of the front-end portion of the battery installed in the tunnel portion of the floor panel is long. Therefore, the front-end portion of the battery becomes relatively heavy, so that there is a concern that the longitudinal weight balance of the vehicle may become too forward due to these two reasons.

Moreover, the large-volume (capacity) battery with a laterally-long shape is installed below the rear seat in the above-described first patent document. Accordingly, the battery below the rear seat comes to be located at a position which is rearward away from the center, in the longitudinal direction, of the vehicle. Thus, this structure may cause a layout where it is difficult to position the heavy object near at the center, in the longitudinal direction, of the vehicle. Therefore, there is room for improvement in the steering stability and the kinetic performance regarding the structure disclosed in the above-described first patent document.

Meanwhile, while the battery is installed inside the protrusion portion positioned on the assistant-driver's-seat side in the above-described second patent document, the longitudinal weight balance of the vehicle seems not to be considered sufficiently. Therefore, there is room for improvement in the steering stability and the kinetic performance regarding the structure disclosed in the above-described second patent document as well.

### SUMMARY OF THE INVENTION

The present invention has been devised in view of the above-described matters, and an object of the present invention is to provide an electric automobile which can properly optimize the longitudinal weight balance of the vehicle and reduce the yaw moment of inertia, thereby improving the steering stability and the kinetic performance of the vehicle.

The electric automobile of the present invention comprises a tunnel portion provided at a central portion, in a vehicle width direction, of a floor panel, protruding upward and extending in a vehicle longitudinal direction, a battery unit installed in the tunnel portion and including plural batteries which are provided in line along the vehicle longitudinal direction, and a motor provided on a forward or rearward side of the battery unit and operative to drive a driving wheel when receiving electric power from the battery, wherein the battery unit is configured such that weight thereof becomes heavier while being separated from the motor. In other words, the weight distribution inside the battery unit increases with an increasing distance of said battery unit to said motor. When said motor is arranged at front portion of the vehicle, the weight distribution inside the battery unit increases from the front of the vehicle towards the rear of the vehicle. On the other said, if said motor is arranged at the rear portion of the vehicle, the weight distribution inside the battery unit increases from the rear of the vehicle towards the front of the vehicle.

According to the present invention, since the floor panel is provided between a front wheel and a rear wheel, i.e., at a middle portion, in the longitudinal direction, of the vehicle, and the tunnel portion of the floor panel is provided at the central portion, in the vehicle width direction, of this floor panel, the heavy object can be positioned near at the center of the vehicle by installing the battery unit in the tunnel portion. Thereby, the yaw moment of inertia can be properly reduced. Further, since the battery unit is configured such that its weight becomes heavier while being separated from the motor in a case where the motor, another heavy object, is provided on the forward or rearward side of the battery unit, it can be properly prevented that the longitudinal weight balance of the vehicle becomes too forward or rearward.

In the present invention, the battery unit may include a plurality of batteries and the plurality of batteries may be arranged in a way so that the weight distribution of the plurality of batteries increases with an increasing distance of the battery unit to the motor in the vehicle direction. Said plurality of batteries may be stacked on op of each other in a vertical direction. One or more batteries or stacks of batteries can be arranged next to each other in a vehicle direction or transversal to the vehicle direction. In particular, the longitudinal axes of the batteries, preferable of all batteries of the battery unit, run parallel to each other or in alignment.

In the present invention, the battery unit may be configured such that width thereof, in a plan view, becomes wider while being separated from the motor.

According to this structure, the battery unit in which the weight becomes heavier while being separated from the motor can be materialized with a simple structure.

In the present invention, the motor may be provided to overlap at least part of a back portion of a seat disposed at the floor panel in a vehicle side view.

According to this structure, since the motor and the back portion of the seat are close to each other, the yaw moment of inertia can be reduced further.

In the present invention, the electric automobile may further comprise a driveshaft to transmit a rotational force of the motor to the driving wheel. Herein, the motor may be arranged closer to a central portion, in a longitudinal direction, of the automobile than the driveshaft.

According to this structure, since the motor can be arranged between the front wheel and the rear wheel, a layout with an appropriate longitudinal weight balance of the vehicle can be obtained.

In the present invention, a left-side seat and a right-side seat may be provided at the floor panel on a left side and a right side of the tunnel portion, respectively. Herein, width of a part of the battery unit which is positioned between the left-side seat and the right-side seat may be set to be narrower than that of another part of the battery unit which is positioned on a vehicle forward side of the left-side seat and the right-side seat.

According to this structure, the width of each of the left-side seat and the right-side seat can be secured sufficiently by relatively narrowing the part of the battery unit positioned between the left-side seat and the right-side seat, without expanding the vehicle width. Thereby, a sitting space for a passenger seated in the left-side seat or the right-side seat can be secured sufficiently.

In the present invention, the electric automobile may further comprise a dash panel extending from a front-end portion of the floor panel upward and in the vehicle width direction. Herein, a front-end portion of the battery unit may be positioned on a vehicle rearward side of the dash panel.

According to this structure, since the front-end portion of the battery unit is positioned inside the tunnel portion, the yaw moment of inertia can be reduced more.

In the present invention, the motor may be provided on a vehicle rearward side of the battery unit, the tunnel portion may be configured such that protrusion height thereof from a level of the floor panel becomes higher while going vehicle forward, and further the battery unit may be configured such that height thereof becomes higher while going vehicle forward in accordance with the protrusion height of the tunnel portion.

According to this structure, since the motor is provided on the vehicle rearward side of the battery unit, the battery unit is configured such that its weight becomes heavier while going vehicle forward. Further, since the protrusion height of the tunnel portion from the floor panel becomes higher while going vehicle forward and also the height of the battery unit becomes higher while going vehicle forward in accordance with the protrusion height of the tunnel portion, the layout of the above-described battery unit's configuration that the weight becomes heavier while being separated from the motor can be simple.

In the present invention, a seat may be provided at a portion of the floor panel which is positioned beside the tunnel portion, and an upper-end portion of the tunnel portion may be located at a higher level than an upper face of a seat cushion of the seat.

According to this structure, since the height of the tunnel portion can be secured sufficiently, the installation space of the battery in the tunnel portion can be large.

The present invention will become apparent from the following description which refers to the accompanying drawings.

### BRIEF DESCRIPTION OF THE DRAWINGS

FIG. **1** is a left-side view of an electric automobile according to an embodiment of the present invention.
FIG. **2** is a plan view of the electric automobile according to the embodiment of the present invention.
FIG. **3** is a plan view showing a cabin in a state where a roof, a door, an interior material and others of the electric automobile are omitted.
FIG. **4** is a sectional view taken along line IV-IV of FIG. **3****.**
FIG. **5** is a sectional view taken along line V-V of FIG. **3****.**
FIG. **6** is a perspective view showing a battery unit installed on a vehicle body only.

### DETAILED DESCRIPTION OF THE INVENTION

Hereafter, an embodiment of the present invention will be described specifically referring to the drawings. Herein, the embodiment described below is just an exemplified one of the present invention, and therefore it does not to intend to restrict any application or use of the present invention.

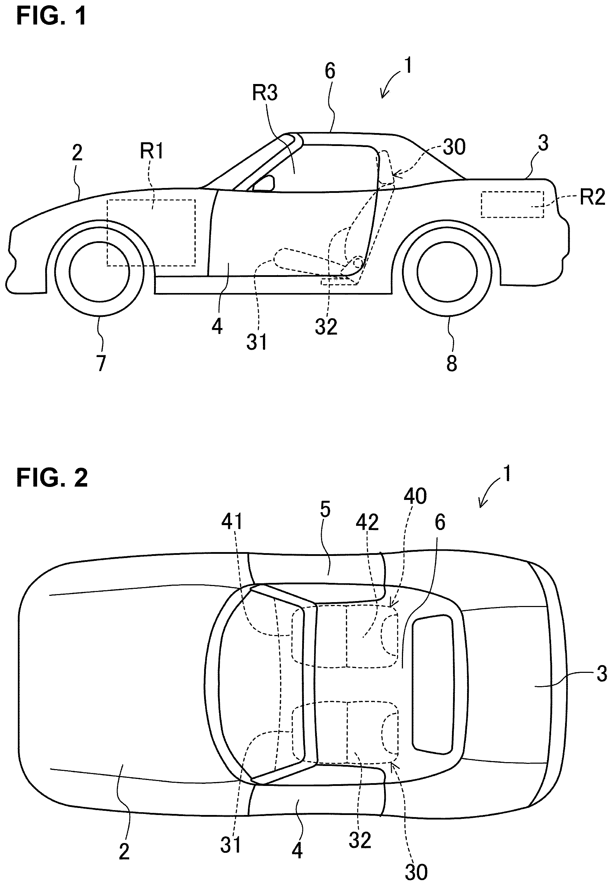

FIGS. **1** and **2** respectively show an exterior of an electric automobile **1** which is provided with a vehicle-body structure **A** according to the embodiment of the present invention. In the description of the present embodiment, a vehicle forward side will be just referred to as the "front (forward) side," a vehicle rearward side will be just referred to as the "rear (rearward) side," a vehicle leftward side will be just referred to as the "left (leftward) side," and a vehicle leftward side will be just referred to as the "left (left) side." A lateral direction of the vehicle corresponds to (matches) a vehicle with direction. A side view of the vehicle means a view of the vehicle when the electric automobile **1** is viewed from the left side or the right side. Further, a view of the vehicle when the electric automobile **1** is viewed from an upper side means a top view or a plan view of the vehicle.

The electric automobile **1** is a passenger car, for example, and may be any type of vehicle, such as a coupe type, a hatch-back type, or a sedan type. The electric automobile **1** has a hood (bonnet hood) **2** at its front side. A front-side baggage loading space **R1** where baggage can be loaded (illustrated by a broken line in FIG. **1** only) is provided below the hood **2.** The front-side baggage loading space **R1** is opened by opening the hood **2,** so that the baggage can be loaded or unloaded.

A rear hood **3** is provided at a rear side of the electric automobile **1.** Below the rear hood **3** is provided a rear-side baggage loading space **R2** where baggage can be loaded (illustrated by a broken line in FIG. **1** only). The rear-side baggage loading space **R2** is opened by opening the rear hood **3,** so that the baggage can be loaded or unloaded. Herein, either one or both of the front-side baggage loading space **R1** and the rear-side baggage loading space **R2** may be set as a space for arranging an auxiliary device therein.

A left-side door **4** and a right-side door **5** are provided to be openable at a left-side portion and a right-side portion of the electric automobile **1.** The roof **6** may be a fixed type, a detachable type, or a foldable type. In a case of the detachable type of the holdable type, the vehicle is an open car with no top above a passenger.

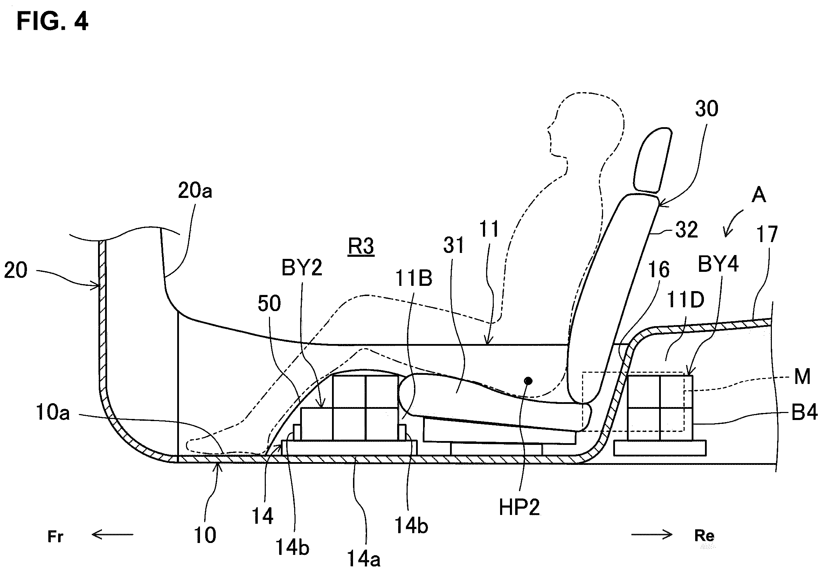

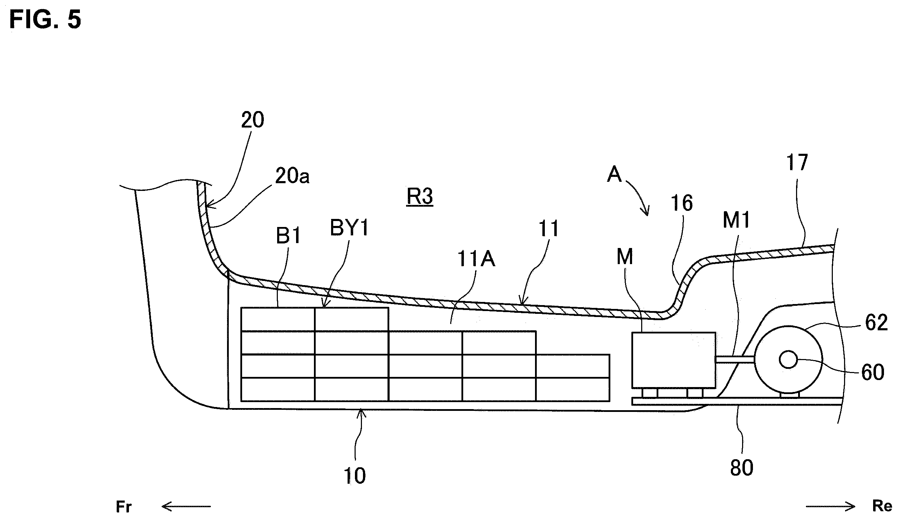

The vehicle-body structure **A** of the electric automobile **1** is equipped with front wheels **7** and rear wheels **8,** and a motor **M** for driving the rear wheels **8** (shown in FIGS. **4** and **5** and hereafter, referred to as the "motor **M**" simply) is provided. An inverter circuit and various sensors which are necessary for controlling the motor **M,** devices for driving operation, and others can be used from any conventionally well-known ones.

While the rear wheel **8** is the driving wheel in the present embodiment, the front wheel **7** may be set as the driving wheel, or both of those 7, 8 may be set as the driving wheels. That depends on how the motor **M** is arranged. That is, in a case where the motor **M** is installed at the rear side of the vehicle only, the rear wheel **8** can be the driving wheel, and also in a case where the motor **M** is installed at the front side of the vehicle only, the front wheel **7** can be the driving wheel. Further, in a case where the plural motors **M** are installed at the front side and the rear side of the vehicle, the both of the wheels **7, 8** can be the driving wheel. Hereinafter, the case where the motor **M** is installed at the rear side of the vehicle only will be described.

As shown in FIG. **1****,** a cabin **R3** as a space for passengers is provided between the front wheels **7** and the rear wheels **8.** As shown in FIG. **4****,** the vehicle-body structure **A** of the electric automobile **1** comprises a floor panel **10** which forms a floor face of the cabin **R3** and a dash panel **20** which forms a front wall of the cabin **R3.** Further, the vehicle-body structure **A** comprises an inclined panel **16** which extends obliquely upward-and-rearward from a rear-end portion of the floor panel and a rear panel **17** which extends rearward from an upper-end portion of the inclined panel **16.**

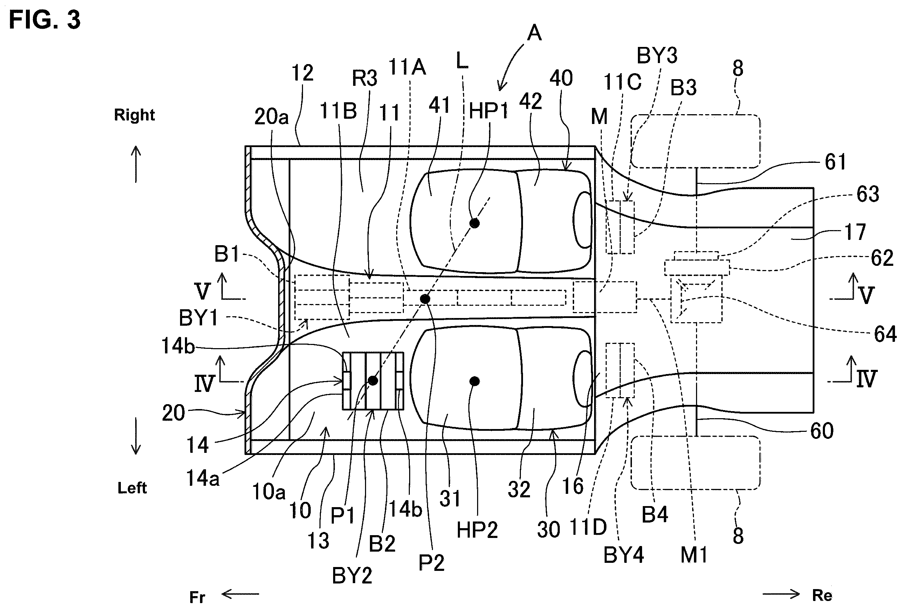

A tunnel portion **11** which protrudes upward and extends in a longitudinal direction is formed at a central portion, in a vehicle width direction, of the floor panel **10.** Respective cabin-side faces of the tunnel portion **11,** the floor panel **10,** and the dash panel **20** are covered with an interior material, not illustrated. As shown in FIG. **3****,** the vehicle-body structure **A** further comprises a right-side side sill **12** which extends in the longitudinal direction along a right edge portion of the floor panel **10** and a left-side side sill **13** which extends in the longitudinal direction along a left edge portion of the floor panel **10.**

A front-end portion of the tunnel portion **11** is positioned at a front-end portion of the floor panel **10,** and a rear-end portion of the tunnel portion **11** is positioned at a rear-end portion of the floor panel **10.** Accordingly, the tunnel portion **11** is continuous from the front-end portion to the rear end of the floor panel **10.**

This electric automobile **1** is right-hand drive. Therefore, the vehicle-body structure **A** is equipped with an assistant driver's seat **30** as a left-side seat and a driver's seat **40** as a right-side seat, which are respectively provided on a left side and a right side of the tunnel portion **11** formed at the floor panel **10.** Specifically, the assistant driver's seat **30** is arranged on the left side of the tunnel portion **11** at the floor panel **10,** and this assistant driver's seat **30** is disposed between the tunnel portion **11** and the left-side side sill **13.** The driver's seat **40** is arranged on the right side of the tunnel portion **11** at the floor panel **10,** and this driver's seat **40** is disposed between the tunnel portion **11** and the right-side side sill **12.** Accordingly, the assistant driver's seat **30** and the driver's seat **40** are provided side by side in the vehicle width direction, interposing the tunnel portion **11** therebetween. Herein, the electric automobile **1** may be left-hand drive, and in this case, the driver's seat **40** may be provided at the left side and the assistant driver's seat **30** may be provided at the right side. Further, a rear seat may be provided as well.

The driver's seat **40** comprises a cushion portion **41** which mainly supports a buttock portion and a thigh portion of the passenger and a back portion **42** which extends upward from a rear end portion of the cushion portion **41** and mainly supports a waist portion, a back portion, and shoulder portions of the passenger. The cushion portion **41** forms a sitting face of the driver's seat **40.** Likewise, the assistant driver's seat **30** comprises a cushion portion **31** and a back portion **32.** In FIG. **3****,** a hip point of the passenger seated in the driver's seat **40** is denoted by a reference character **HP1,** and a hip point of the passenger seated in the assistant driver's seat **30** is denoted by a reference character **HP2.** Herein, while it is assumed that the passenger seated has a standard body size and weight, each position of the hip points **HP1, HP2** does not move so much even when the body size and weight of the passenger changes. In FIG. **4****,** the hip point of the passenger seated in the assistant driver's seat **30** is denoted by the reference character **HP2.**

Herein, in a case where the driver's seat **40** is attached to the floor panel **10** such that it is slidable in the longitudinal, the hip point **HP1** moves in the longitudinal direction according to its slide position. However, the hip point **HP1** where the driver's seat **40** is located at a position where the passenger with the standard body size can take a standard driving position can be made standard. The hip point **HP2** on the assistant-driver's-seat **30** side is the same as well. The assistant driver's seat **30** may be fixedly attached to the floor panel **10** without being slidable in the longitudinal direction.

An upper end portion of the tunnel portion **11** is located at a higher level than each upper face of the cushion portions **31, 41.** Thereby, a installation space where a center battery unit **BY1** described later is installed in the tunnel portion **11** can be securely expanded in a height direction.

As shown in FIGS. **4** and **5****,** the protrusion height of the tunnel portion **11** from the level of the floor panel **10** (the protrusion height from the level of a portion where the assistant driver's seat **30** and the river's seat **40** are attached) becomes higher while going vehicle forward. Accordingly, the upper end portion of the tunnel portion **11** is inclined gently such that its rear side becomes low. The assistant driver's seat **30** and the driver's seat **40** are positioned beside a rear-side portion of the tunnel portion **11,** and the rear-side portion of the tunnel portion **11** overlaps the assistant driver's seat **30** and the driver's seat **40** in a side view. Since the height of the overlapping portion of the tunnel portion **11** with the assistant driver's seat **30** and the driver's seat **40** in the side view becomes low, it becomes possible that the passenger (driver) seated in the driver's seat **40** moves onto the assistant driver's seat **30** beyond the tunnel portion **11,** or the passenger seated in the assistant driver's seat **30** moves onto the driver's seat **40** beyond the tunnel portion **11.**

Further, as shown in FIG. **3****,** the width (lateral size) of the tunnel portion **11** becomes wider while going forward. Specifically, the distance between the left-side wall and the right-side wall of the tunnel portion **11** becomes narrower while going rearward, and the width of the rear-side portion of the tunnel portion **11** is narrower than that of a front-side portion of the tunnel portion **11.** Since the width of the overlapping portion of the tunnel portion **11** with the assistant driver's seat **30** and the driver's seat **40** in the side view is narrow, the sufficient width of each of the assistant driver's seat **30** and the driver's seat **40** can be secured, suppressing the vehicle width from being improperly wide.

Herein, since the front portion of the tunnel portion **11** is a portion which does not overlap the assistant driver's seat **30** and the driver's seat **40** in the side view, there is no problem in securing the width of the assistant driver's seat **30** and the driver's seat **40** by enlarging the width of the front portion of the tunnel portion **11.**

The dash panel **20** extends upward and in the vehicle width direction from the front-end portion of the floor panel **10,** and is a member to partition the cabin **R3** from its font-side space. A protrusion portion **20a** which protrudes toward an inside of the cabin **R3** is provided at a central portion, in the vehicle width direction, of the dash panel **20.** As shown in FIG. **5****,** a lower-end portion of the protrusion portion **20a** is continuous to the front-end portion of the tunnel portion **11.**

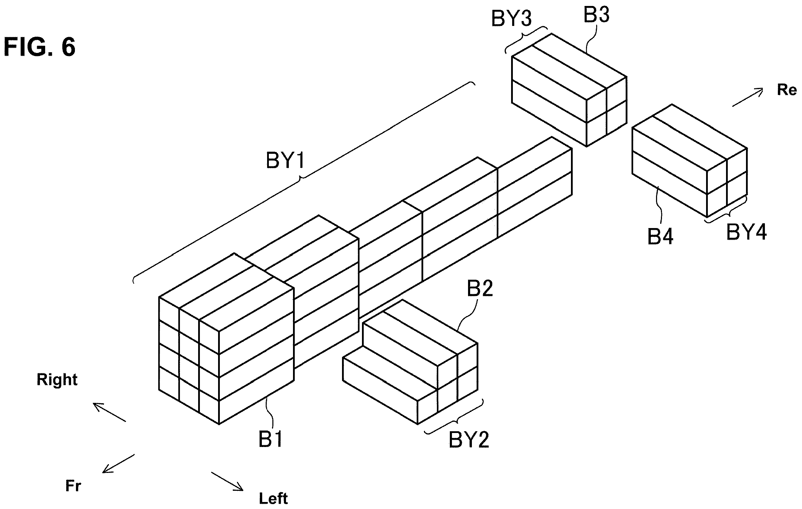

As shown in FIGS. **3 - 6**, the vehicle-body structure **A** comprises the center battery unit **BY1,** an assistant-driver's-seat side battery unit **BY2,** a rear-right side battery unit **BY3,** and a rear-left side battery unit **BY4.** In the present embodiment, the plural battery units **BY1 - BY4** are arranged at various portions of a vehicle body, so that the installation quantity (volume, capacity) of the battery can be increased by utilizing plural spaces formed at the various portions of the vehicle body.

The center battery unit **BY1** is installed in the tunnel portion **11.** In the tunnel **11,** a center-battery arrangement portion (second battery arrangement portion) **11A** to install the center battery unit **BY1** is provided to extend in the longitudinal direction, and the center battery unit **BY1** arranged at the center-battery arrangement portion **11A** is detachably attached to the floor panel **10** or the like (in a replaceable manner). A front-end portion of the center battery unit **BY1** in its fixed state to the floor panel **10** or the like is positioned on a rearward side of the dash panel **20.** Thereby, any battery as a heavy object does not exist at the front-side portion of the vehicle.

The center battery unit **BY1** includes plural batteries (center batteries) **B1** which are provided in line along the longitudinal direction, and these batteries **B1** supply electric power to the motor **M.** The motor **M** drives the rear wheels **8** by receiving the electric power from the center battery unit **BY1.** The center battery unit **BY1** may comprise a battery case to install the center batteries **B1,** a sensor to detect the temperature of the center batteries **B1,** a heat exchanger to adjust the temperature of the center batteries **B1,** and others, which are not illustrated.

The center battery **B1** is made of a chargeable/dischargeable secondary battery (battery cell) or the like. However, this battery **B1** may be made of a lithium-ion battery, a solid-state battery, or the like. Any other secondary battery is applicable. The center battery **B1** may be a so-called battery cell or a battery pack to store battery cells. While the drawings illustrate the center battery **B1** in a rectangular-parallelepiped shape, but this is not limited to this shape. Further, the center batteries **B1** are all the same.

The motor **M** drives the rear wheels **8,** and therefore it is provided at a rear side of the vehicle body, specifically, on the rearward side of the center battery unit **BY1.** The center battery unit **BY1** is configured such that its weight becomes heavier while being separated from the motor **M,** i.e., while going forward. For example, as shown in FIG. **3****,** the center battery unit **BY1** is configured such that its width (its lateral size), in the top view, becomes wider while being separated from the motor **M.** Specifically, the center batteries **B1** constituting the center battery unit **BY1** are disposed in line in the vehicle longitudinal direction which corresponds to (match) a batteries' longitudinal direction. The foremost-positioned center batteries **B1** are arranged such that three of batteries are in line in the vehicle width direction. The second-positioned center batteries **B1** are arranged such that two of batteries are in line in the vehicle width direction. The third-positioned, fourth-positioned, and rearmost-positioned center batteries **B1** are respectively arranged such that a single line of batteries extends in the longitudinal direction. That is, those batteries **B1** are not in line in the vehicle width direction.

Further, the center battery unit **BY1** is configured such that the size, in a vertical direction, thereof becomes longer while being separated from the motor **M.** As shown in FIG. **5****,** the foremost-positioned center batteries **B1** and the second-positioned center batteries **B1** are arranged such that four of batteries are in line in the vehicle direction. The third-positioned center batteries **B1** and the fourth-positioned center batteries **B1** are arranged such that three of batteries are in line in the vehicle direction. The rearmost-positioned center batteries **B1** are arranged such that two of batteries are in line in the vehicle direction. The number of the center batteries **B1** stacked in the vertical direction can be also called a stack number or a step number.

That is, the center batteries **B1** are arranged such that the width of the center battery unit **BY1** becomes wider while being separated from the motor **M** and, that the size, in the vertical direction, of the center battery unit **BY1** becomes longer while being separated from the motor **M.** Accordingly, the front-end portion of the center battery unit **BY1** is the heaviest and a rear-end portion of the center battery unit **BY1** is the lightest. A middle portion, in the longitudinal direction, of the center battery unit **BY1** has a middle weight between the weight of the front-end portion and the weight of the rear-end portion.

The assistant driver's seat **30** and the driver's seat **40** are positioned beside the third-positioned, fourth-positioned and rearmost-positioned center batteries **B1** of the center battery unit **BY1.** Meanwhile, the foremost-positioned and second-positioned center batteries **B1** of the center battery unit **BY1** are arranged on the forward side of the assistant driver's seat **30** and the driver's seat **40.** That is, since the center batteries **B1** of the center battery unit **BY1** are not arranged in line in the vehicle width direction between the assistant driver's seat **30** and the driver's seat **40,** the width of the portion of the center battery unit **BY1** where the center batteries **B1** are not arranged in line is set to be narrower than that of the portion of the center battery unit **BY1** which is positioned on the forward side of the assistant driver's seat **30** and the driver's seat **40.** The width of the center battery unit **BY1** becomes narrower while going rearward, corresponding to the width of the tunnel portion **11.**

Further, the stack (step) number of the foremost-positioned and second-positioned center batteries **B1** of the center battery unit **BY1** is the most, the stack (step) number of the third-positioned and fourth-positioned center batteries **B1** is fewer, and the stack (step) number of the rearmost-positioned center batteries **B1** is the fewest. Thereby, the center battery unit **BY1** is configured such that its height becomes higher while going forward, corresponding to the protrusion height of the tunnel portion **11.**

The number, the longitudinally-arranged number, and the stack number of the center batteries **B1** constituting the center battery unit **BY1** are not limited to the above-described ones, and any number is applicable. That is, as long as those numbers of the center batteries **B1** are appropriately set such that the battery unit **BY1** becomes heavier while being separated from the motor **M,** any number more than two (including two) is applicable as the longitudinally-arranged number and also any number more than one (including one) is applicable as the stack number.

The assistant-driver's-seat side battery unit **BY2** is arranged at a portion of the floor panel **10** which is positioned on the forward side of the cushion portion **31** of the assistant driver's seat **30.** The assistant-driver's-seat side battery arrangement portion (third battery arrangement portion) **11B** where the assistant-driver's-seat side battery unit **BY2** is arranged is provided on the forward side of the assistant driver's seat **30.** Specifically, the assistant-driver's-seat side battery unit **BY2** is arranged at a rear-side portion of the floor panel **10** which is positioned on the assistant-driver's-seat side, whereas a front-side portion of the floor panel **10** which is positioned on the assistant-driver's-seat side is set as a foot-placement portion **10a** where feet of the passenger seated in the assistant driver's seat **30** are placed. The passenger having the standard body size seems not to place the passenger's feet just before the cushion portion **31** of the assistant driver's seat, but this passenger tends to place the feet forward away from the cushion portion **31,** stretching the passenger's legs. In the present embodiment, since the assistant-driver's-seat side battery unit **BY2** does not exist at the portion forward away from the cushion portion **31** and also the foot-placement portion **10a** is provided, the comfortableness of the passenger seated in the assistant driver's seat **30** can be improved, installing the batteries **B2** on the side of the assistant driver's seat **30.**

A positional relationship of the assistant-driver's-seat side battery unit **BY2** and the hip point **HP1** of the passenger seated in the driver's seat **40** will be described. The assistant-driver's-seat side battery unit **BY2** is positioned on the forward side of the hip point **HP1** of the passenger seated in the driver's seat **40.** In FIG. 3, a gravity center of the assistant-driver's-seat side battery unit **BY2** is denoted by a reference character **P1,** whereas the center of the vehicle (in the longitudinal direction and in the width direction) is denoted by a reference character **P2.** In the plan (top) view, the hip point **HP1** of the passenger seated in the driver's seat **40,** the vehicle center **(P2),** and the gravity center **(P1)** of the assistant-driver's-seat side battery unit **BY2** are positioned on an identical liner (straight) line (illustrated by an imaginary line **L).** This imaginary line **L** is inclined, in the plan view, such that its rear side is located on the side of the driver's seat **40.**

The assistant-driver's-seat side battery unit **BY2** includes the assistant-driver's-seat side batteries **B2** like the center batteries **B1** which constitutes the center battery unit **BY1.** The assistant-driver's-seat side batteries **B2** are operative to supply the electric power to the motor **M** as well. The assistant-driver's-seat side battery unit **BY2** may comprise a battery case, a sensor to detect the temperature of the assistant-driver's-seat side batteries **B2,** a heat exchanger to adjust the temperature of the assistant-driver's-seat side batteries **B2,** and others.

An upper-end portion of the assistant-driver's-seat side battery unit **BY2** is located at a lower level than an upper face of the front-end portion of the cushion portion **31** of the assistant driver's seat **30.** The assistant-driver's-seat side battery unit **BY2** is configured such that its level becomes lower while going forward. That is, three of the assistant-driver's-seat side batteries **B2** are in line in the longitudinal direction, and the stack (step) number of the foremost-positioned assistant-driver's-seat side batteries **B2** is one, whereas the stack (step) number of the second-positioned and rearmost-positioned assistant-driver's-seat side batteries **B2** is two. The height of the upper-end portion of the upper-stacked assistant-driver's-seat side batteries **B2** is located at the lower level than the upper face of the front-end portion of the cushion portion **31** of the assistant driver's seat **30.** Thereby, the assistant-driver's-seat side battery unit **BY2** may not contact easily a back face of the thigh portion of the passenger or the like, so that the comfortableness of the passenger seated in the assistant driver's seat **30** can be improved. Herein, the assistant-driver's-seat side batteries **B2** is covered with a battery cover **50** (shown in FIG. **4** only). The battery cover **50** may be made of a soft material, such as cloth or synthetic leather, or a hard resign material. The battery cover **50** may be a member which constitutes part of the assistant-driver's-seat side battery unit **BY2.**

The foremost-positioned assistant-driver's-seat side batteries **B2** is a front-side battery, and the rearmost-positioned assistant-driver's-seat side batteries **B2** is a rear-side battery. The rearmost-positioned assistant-driver's-seat side batteries **B2** are the two-stack batteries, and the foremost-positioned assistant-driver's-seat side batteries **B2** are the one-stack batteries. Accordingly, the rearmost-positioned assistant-driver's-seat side batteries **B2** is higher than the foremost-positioned assistant-driver's-seat side batteries **B2.**

Further, in the present embodiment, the hip point **HP2** of the passenger seated in the assistant's seat **30** is set to be lower than an upper face of a rear side of the assistant-driver's-seat side batteries **B2.** That is, legs of the passenger seated in the assistant driver's seat **30** take a shape such that their front sides become higher while approaching their knees from the hip point **HP2.** By setting the level of the upper face of the rear side of the assistant-driver's-seat side batteries **B2** above the hip point **HP2** according to this shape of the passenger's legs, the installation quantity of the assistant-driver's-seat side batteries **B2** can be increased.

The number, the longitudinally-arranged number, and the stack number of the assistant-driver's-seat side batteries **B2** constituting the assistant-driver's-seat side battery unit **BY2** are not limited to the above-described ones, and any number is applicable. That is, as long as those numbers of the assistant-driver's-seat side batteries **B2** are appropriately set such that the height of the assistant-driver's-seat side battery unit **BY2** becomes lower while going forward, any number more than two (including two) is applicable as the longitudinally-arranged number and also any number more than one (including one) is applicable as the stack number. The assistant-driver's-seat side batteries **B2** may be positioned such that its longitudinal direction matches the vehicle width direction or the vehicle longitudinal direction.

The assistant-driver's-seat side battery unit **BY2** is detachably installed on the vehicle body, i.e., on the floor panel **10.** Specifically, as shown in FIG. **4****,** an attaching/detaching mechanism **14** of the assistant-driver's-seat side battery unit **BY2** is provided at the floor panel **11** on the side of the assistant driver's seat **30.** The attaching/detaching mechanism **14** comprises a body portion **14a** which is fixed to the floor panel **10** on the side of the assistant driver's seat **30** and an engagement portion **14b** which is provided at the body portion **14a** and engages with the assistant-driver's-seat side battery unit **BY2.** The engagement portion **14b** is configured to move between an engaging position where it engages with the assistant-driver's-seat side battery unit **BY2** and an un-engaging position where it is released from the assistant-driver's-seat side battery unit **BY2.** By shifting the engagement portion **14b** to the engaging position in a state where the assistant-driver's-seat side battery unit **BY2** is installed, the assistant-driver's-seat side battery unit **BY2** comes to be fixed to the floor panel **10** so that it cannot be moved by vibrations during vehicle traveling or the like. Meanwhile, when the assistant-driver's-seat side battery unit **BY2** is detached from the vehicle, the engagement portion **14b** is shifted to the un-engaging position from the engaging position.

The attaching/detaching mechanism **14** of the assistant-driver's-seat side battery unit **BY2** can be provided as needed. Further, the structure of the attaching/detaching mechanism **14** is not limited to the above-described one, and any type of structure, such as an attaching structure where the assistant-driver's-seat side battery unit **BY2** is fastened to the floor panel **10** or a bracket (not illustrated) or the like by using screws or a band, or an engaging structure where a hook is used, is applicable.

In a case where the electric automobile **1** gives higher priority to the light weight than the traveling distance, for example, the electric automobile **1** can be traveled without the assistant-driver's-seat side battery unit **BY2.** Further, the assistant-driver's-seat side battery unit **BY2** can be also detached in order to secure the sufficient sitting space for the passenger seated in the assistant driver's seat **30.** The assistant-driver's-seat side battery unit **BY2** may be detached for the higher priority of the longitudinal or lateral weight balance than the traveling distance of the electric automobile **1.** In this case, since the weight balance of the electric automobile **1** can be adjected by using the assistant-driver's-seat side battery unit **BY2,** the assistant-driver's-seat side battery unit **BY2** can be used as part of a weight-balance adjusting means. Moreover, part of the plural assistant-driver's-seat side batteries **B2** constituting the assistant-driver's-seat side battery unit **BY2** may be configured to be detachable. Additionally, the plural assistant-driver's-seat side batteries **B2** constituting the assistant-driver's-seat side battery unit **BY2** may be divided into plural groups, and their groups may be configured to be detachable separately.

As shown in FIGS. **3** and **5****,** the motor **M** is attached to a subframe **80** which is provided below a rear portion of the vehicle body, and it is arranged below the inclined panel **16** and the rear panel **17** at a middle portion, in the vehicle width direction, of the vehicle body. The motor **M** is arranged such that its output shaft **M1** extends in the longitudinal direction. In the present embodiment, the output shaft **M1** of the motor **M** projects rearward. A front-side portion of the motor **M** is arranged in the tunnel portion **11.** Thus, since the installation position of the motor **M** is set to be as forward as possible, the motor **M** is arranged such that it overlaps at least part of the back portion **32** of the assistant driver's seat **30** in the side view shown in FIG. **4****.** In the side view, for example, the motor **M** can be arranged such that a lower-side portion of the back portion **32** and the front-side portion of the motor **M** overlap each other. Thereby, the motor **M** can be positioned near the center of the vehicle.

The vehicle-body structure **A** comprises a left-side drive shaft **60** and a right-side drive shaft **61** which are provided in back of the tunnel portion **11** formed at the floor panel **10** and transmit a rotational force of the motor **M** to the rear wheels **8** as the driving wheels. The left-side drive shaft **60** and the right-side drive shaft **61** extend in the vehicle width direction. The motor **M** is provided between the tunnel portion **11** and the left-side and right-side drive shafts **60, 61.** Accordingly, the motor **M** is arranged closer to the central portion, in the longitudinal direction, of the vehicle than the drive shafts **60, 61.** Herein, in a case where the motor is provided at the front side and drive the front wheels **7,** which is not illustrated, the left-side and right-side drive shafts can be provided in front of the tunnel portion **11.**

The vehicle-body structure **A** further comprises a transmission **62** and a deferential gear box **63.** The transmission **62** and the deferential gear box **63** are attached to the sub frame **80.** The transmission **62** and the deferential gear box **63** are arranged behind the motor **M** and on the side of the driver's seat **40** at the vehicle body. The rotational force of the output shaft **M1** of the motor **M** is inputted to the transmission **62** via a gear **64.** The rotational force of the output shaft **M1** extending in the longitudinal direction is transferred to a rotational force around an axis extending in the vehicle width direction and inputted to the transmission **62.** The transmission **62** is a speed-changing gear or a speed-reducing gear. In a case where the transmission **62** is the speed-changing gear, it may be a stepped transmission or a non-stage transmission. The transmission **62** and the deferential gear box **63** may be integrated, or gears to constitute a transmission and gears to constitute a deferential mechanism may be installed in a single gear box. The motor **M** and the transmission **62** may be modularized. Herein, in a case where the motor **M** is provided at the front side of the vehicle body and drives the front wheels **7,** the transmission **62** and the deferential gear box **63** can be provided in front of the tunnel portion **11,** which is not illustrated.

The rotational force of the motor **M** which is outputted from the transmission **62** is transferred to the right-and-left rear wheels **8** via a deferential mechanism (not illustrated) stored in the deferential gear box **63** and the drive shafts **60, 61.**

As shown in FIG. **3****,** the rear-right side battery unit **BY3** is provided behind the driver's seat **40.** The inclined panel **16** is positioned in back of the driver's seat **40,** and a rear-right side battery arrangement portion (first battery arrangement portion) **11C** where the rear-right side battery unit **BY3** can be arranged is provided in back of the inclined panel **16** (outside the cabin **R3).** The rear-right side battery unit **BY3** comprises plural rear-right side batteries **B3** like the center batteries **B1** constituting the center battery unit **BY1.** The rear-right side batteries **B3** are operative to supply the electric power to the motor **M** as well. The rear-right side battery unit **BY3** may comprise a battery case, a sensor to detect the temperature of the rear-right side batteries **B3,** a heat exchanger to adjust the temperature of the rear-right side batteries **B3,** and others.

Further, the rear-left side battery unit **BY4** is provided behind the assistant driver's seat **30.** The inclined panel **16** is positioned in back of the assistant driver's seat **30,** and a rear-left side battery arrangement portion (first battery arrangement portion) **11D** where the rear-left side battery unit **BY4** can be arranged is provided in back of the inclined panel **16** (outside the cabin **R3).** The rear-left side battery unit **BY4** comprises plural rear-left side batteries (rear batteries) **B4** like the center batteries **B1** constituting the center battery unit **BY1.** The rear-left side batteries **B4** are operative to supply the electric power to the motor **M** as well. The rear-left side battery unit **BY4** may comprise a battery case, a sensor to detect the temperature of the rear-left side batteries **B4,** a heat exchanger to adjust the temperature of the rear-left side batteries **B4,** and others.

The rear-right side battery arrangement portion **11C** and the rear-left side battery arrangement portion **11D** are provided relatively on the forward side of the transmission **62.** The rear-right side battery arrangement portion **11C** and the rear-left side battery arrangement portion **11D** are further provided on the both sides, in the vehicle width direction, of the motor **M.** That is, the motor **M** is arranged between the rear-right side batteries **B3** and the rear-left side batteries **B4,** and also provided such that at least part of the rear-right side batteries **B3** and the rear-left side batteries **B4** overlap the motor **M** in the side view. Since the rear-right side batteries **B3** and the rear-left side batteries **B4** are provided at the both sides, in the vehicle width direction, of the motor **M,** respectively, these can be called side batteries.

The number, the longitudinally-arranged number, and the stack number of the rear-right side batteries **B3** constituting the rear-right side battery unit **BY3** can be set arbitrarily. Further, the number, the longitudinally-arranged number, and the stack number of the rear-left side batteries **B4** constituting the rear-left side battery unit **BY4** can be set arbitrarily as well. The rear-right side batteries **B3** and the rear-left side batteries **B4** may be arranged such that their longitudinal direction match the vehicle width direction or the longitudinal direction. Further, the rear-right side battery unit **BY3** and the rear-left side battery unit **BY4** may be detachable.

### (Effects of Embodiment)

According to the vehicle-body structure **A** of the electric automobile **1** of the present embodiment, since the floor panel **10** is provided between the front wheels **7** and the rear wheels **8,** i.e., at the middle portion, in the longitudinal direction, of the vehicle, and the tunnel portion **11** of the floor panel **10** is provided at the central portion, in the vehicle width direction, of this floor panel **10,** the heavy object can be positioned near at the center of the vehicle by installing the center battery unit **BY1** in the tunnel portion **11.** Thereby, the yaw moment of inertia can be properly reduced. Further, since the center battery unit **BY1** is configured such that its weight becomes heavier while being separated from the motor **M,** it can be properly prevented that the longitudinal weight balance of the vehicle becomes too forward or rearward.

Further, since the assistant-driver's-seat side battery unit **BY2** is arranged on the forward side of the cushion portion **31** of the assistant driver's seat **30,** the sitting space for the passenger seated in the assistant driver's seat **30** can be secured. Herein, the assistant-driver's-seat side battery unit **BY2** is one of the heavy objects because it is operative to supply the electric power to the motor **M.** However, since the assistant-driver's-seat side batteries **B2** is positioned on the vehicle forward side of the hip point **HP1** of the passenger seated in the driver's seat **40,** the gravity center of the vehicle with no passenger seated in the assistant driver's seat **30** comes to be near the center of the vehicle, so that the yaw moment of inertia can be properly reduced.

Further, when viewed in the vehicle longitudinal direction, the tunnel portion **11** of the floor panel **10,** the motor **M,** and the drive shafts **60, 61** are arranged in line in this order. Accordingly, the motor **M** of the heavy object is closer to the central portion, in the longitudinal direction, of the vehicle than the drive shafts **60, 61.** Moreover, since at least each part of the rear-right side battery unit **BY3** and the rear-left battery unit **BY4** overlaps the motor **M** in the side view, the battery units **BY3, BY4** are closer to the central portion, in the longitudinal direction, of the vehicle than the drive shafts **60, 61.** Therefore, an effective layout for the yaw moment of inertia, including the rear-right side battery unit **BY3** and the rear-left battery unit **BY4,** can be attained. Additionally, since the rear-right side battery unit **BY3** and the rear-left battery unit **BY4** are provided in a space before the drive shafts **60, 61,** the sufficient installation quantity of the battery can be secured.

The above-described embodiment just shows an exemplified sample of the present invention, and therefore the present invention should not be construed based on this embodiment. Any modification or change is applicable within the scope of the claims of the present invention. For example, either one of the rear-right side battery unit **BY3** and the rear-left battery unit **BY4** may be provided only. The motor **M** may be disposed on the left side or on the right side of the vehicle body. The motor **M** may be arranged such that its output shaft **M1** extends in the vehicle width direction.

As described above, the present invention is usable for the electric automobile in which the motor for drive and the battery are installed.

## Claims

1. An electric automobile (1), comprising:
a tunnel portion (11) provided at a central portion, in a vehicle width direction, of a floor panel (10), protruding upward and extending in a vehicle longitudinal direction;
a battery unit (BY1) installed in the tunnel portion (11) and including plural batteries (B 1) which are provided in line along the vehicle longitudinal direction; and
a motor (M) provided on a forward or rearward side of the battery unit (BY1) and operative to drive a driving wheel when receiving electric power from the battery (BY1),
wherein said battery unit (BY1) is configured such that weight thereof becomes heavier while being separated from said motor (M).

2. The electric automobile (1) of claim 1, wherein said battery unit (BY1) includes plural batteries (B1) and the batteries (B1) are arranged such that the weight distribution of the plural batteries (B 1) of the battery unit (BY1) increases with increasing distance to said motor (M) in the vehicle direction.

3. The electric automobile (1) of claim 1 or 2, wherein said battery unit (BY1) is configured such that width thereof, in a plan view of the vehicle (1), becomes wider while being separated from said motor (M).

4. The electric automobile (1) of anyone of claims 1 to 3, wherein said motor (M) is provided to overlap at least part of a back portion of a seat (30, 40) disposed at the floor panel (10) in a vehicle side view.

5. The electric automobile (1) of anyone of claims 1 to 4, further comprising a driveshaft (60, 61) to transmit a rotational force of said motor (M) to the driving wheel (8), wherein said motor is (M) arranged closer to a central portion, in a longitudinal direction, of the automobile (1) than said driveshaft (60, 61).

6. The electric automobile (1) of claim 3, wherein a left-side seat (30) and a right-side seat (40) are provided at the floor panel (10) on a left side and a right side of said tunnel portion (11), respectively, and width of a part of said battery unit (BY1) which is positioned between the left-side seat (30) and the right-side seat (40) is set to be narrower than that of another part of said battery unit (BY1) which is positioned on a vehicle forward side of the left-side seat (30) and the right-side seat (40).

7. The electric automobile (1) of anyone of claims 1 to 6, further comprising a dash panel (20) extending from a front-end portion of the floor panel (10) upward and in the vehicle width direction, wherein a front-end portion of said battery unit (BY1) is positioned on a vehicle rearward side of said dash panel (20).

8. The electric automobile (1) of anyone of claims 1 to 6, wherein said motor (M) is provided on a vehicle rearward side of said battery unit (BY1), said tunnel portion (11) is configured such that protrusion height thereof from a level of said floor panel (10) becomes higher while going vehicle forward, and the battery unit (BY1) is configured such that height thereof becomes higher while going vehicle forward in accordance with the protrusion height of the tunnel portion (11).

9. The electric automobile (1) of claim 8, wherein a seat (30, 40) is provided at a portion of the floor panel (10) which is positioned beside the tunnel portion (11), and an upper-end portion of the tunnel portion (11) is located at a higher level than an upper face of a seat cushion (31, 41) of said seat (30, 40).

10. The electric automobile (1) of anyone of claims 1 to 9, further comprising a dash panel (20) extending upward from a front-end portion of the floor panel (10) and forming a front wall of a cabin (R3) and an inclined panel (16) extending obliquely upward-and-rearward from a rear-end portion of the floor panel (10), wherein a front-end portion of said tunnel portion (11) is connected to said dash panel (20) and a rear-end portion of said tunnel portion (11) is connected to said inclined panel (16), said motor (M) is provided on a rearward side of said battery unit (BY1) and operative to drive a rear wheel (8), and said battery unit (BY1) is configured such that volume thereof in a vehicle width direction and/or volume thereof in a vehicle height direction becomes larger while going vehicle forward so as to attain said weight configuration of the battery unit (BY1).

11. The electric automobile (1) of claim 10, wherein said battery unit (BY1) is configured such that width thereof, in a plan view, becomes wider while going vehicle forward.

12. The electric automobile (1) of claim 11, wherein said motor (M) is arranged at a middle portion, in the vehicle width direction, of and below said inclined panel (16) such that an output shaft (M1) thereof projects rearward, in the vehicle longitudinal direction, and that the motor (M) overlaps, in a vehicle side view, at least part of a seatback portion of a seat (30, 40) which is provided at a portion of the floor panel (10) which is positioned beside the tunnel portion (11).

13. The electric automobile (1) of claim 12, wherein a gear device (62, 63, 64) is arranged at a middle portion, in the vehicle width direction, of an area which is positioned on a rearward side of said motor (M), and said gear device (62, 63, 64) is operative to transmit a rotational force inputted from the output shaft (M1) of the motor (M) to a driveshaft (60, 61) which extends in the vehicle width direction and drives the rear wheel (8).

14. The electric automobile (1) of claim 6, wherein said battery unit (BY1) includes plural batteries (B1) which are provided in line along the vehicle width direction, and the battery unit (BY1) is configured such that the number of the batteries (B1) provided in line along the vehicle width direction which are positioned between the left-side seat and the right-side seat (30, 40) is smaller than that of the batteries (B1) provided in line along the vehicle width direction which are positioned on a vehicle forward side of the left-and-right side seats (30, 40).

15. The electric automobile (1) of claim 7, wherein said battery unit (BY1) includes plural batteries (B1) which are stacked in a vertical direction, and the battery unit (BY1) is configured such that the number of stacked batteries (B1) and the number of the batteries provided in line along the vehicle width direction at a front-end portion of the battery unit (BY1) which is nearest to said dash panel (20) are the largest, respectively.
